# EUROPÄISCHE PATENTSCHRIFT

(11) **EP 1 495 951 B1**
(45) Veröffentlichungstag und Bekanntmachung des Hinweises auf die Patenterteilung: **01.02.2006**
(21) Anmeldenummer: 04014054.3
(22) Anmeldetag: 16.06.2004
(51) Int. Cl.: B62D 63/06, B60P 3/07, B62D 61/08

(54) **Kfz-Anhänger zum Transport eines Dreirad-Fahrzeugs**
Motor vehicle trailer for transporting a three wheeled vehicle
Remorque de véhicule à moteur pour le transport d'un véhicule à trois roues

(30) Priorität: 09.07.2003 DE 20310701 U
(43) Veröffentlichungstag der Anmeldung: 12.01.2005
(73) Patentinhaber: Schirakowski, Dirk, 34127 Kassel (DE)
(72) Erfinder: Schirakowski, Dirk, 34127 Kassel (DE)
(74) Vertreter: Freiherr von Schorlemer, Reinfried

(56) Entgegenhaltungen:
- DE-A- 4 427 925
- US-A- 2 828 136
- US-A- 3 767 223
- US-A1- 2003 147 732

## Beschreibung

Die Erfindung betrifft einen Kfz-Anhänger der im Oberbegriff des Anspruchs 1 angebenen Gattung. Ein solcher Anhänger ist zum Beispiel aus der US 2828136 A bekannt.

Zum Verkauf von Waren wie z. B. Getränken, Grillgut, Eis od. dgl. auf Veranstaltungen (Catering) und/oder zur Präsentation von Waren zu Werbezwecken auf Ausstellungen od. dgl. werden häufig dreirädige Kleinkraftfahrzeuge mit 50 cm³ bis 200 cm³ verwendet, die vorn ein Fahrerhaus und hinten einen Laderaum mit oder ohne Kofferaufbau aufweisen. Die Geschwindigkeiten, die mit solchen, nachfolgend kurz als "Dreirad-Transporter" bezeichneten Fahrzeugen erlaubt bzw. erreichbar sind, betragen ca. 35 km/h, während die zulässige Nutzlast beim Vorhandensein eines Kofferaufbaus mit ca. 80 kg vergleichsweise gering ist. Daraus ergeben sich insbesondere zwei Nachteile. Zum einen ist es mit viel Zeitaufwand verbunden, den Transporter über größere Strecken zu verfahren, obwohl gerade bei ihnen eine erhöhte Mobilität erwünscht ist. Zum anderen ist das zulässige Gesamtgewicht so klein, daß bei der festen Installation von Kaffee- oder Eismaschinen, Grillgeräten od. dgl. meistens schon die höchste mögliche Zuladung erreicht wird und daher Zubehör wie Geschirr usw. beim Transport nicht mehr zugeladen werden darf. Daneben bereitet es Unbequemlichkeiten, daß derartige Transporter meistens mit zu weichen Federungen, insbesondere im Bereich der Hinterräder versehen und daher im voll beladenen Zustand nicht ausreichend verkehrssicher sind.

Zur Vermeidung dieser Nachteile wäre es möglich, den Transporter bei Bedarf auf einem üblichen, für Kraftfahrzeuge zugelassenen Anhänger zu verladen. Das würde jedoch vom Besitzer eines derartigen Transporters einerseits erfordern, daß er speziell für Transportzwecke zusätzlich über einen zugelassenen Kfz-Anhänger verfügt. Andererseits müßte der Anhänger mit an den Transporter angepaßten Verriegelungsmechanismen versehen sein, um zu verhindern, daß der Transporter sich beim Transport auf dem Anhänger hin- und herbewegt oder gar von diesem löst. Schließlich müßte der Transporter dort, wo er gebraucht werden soll, wieder vom Anhänger getrennt werden, um ihn in die erforderliche Gebrauchslage zu bringen.

Eine andere Möglichkeit zur Erleichterung des Transports eines dreirädigen Transporters besteht darin, ihn aus mehreren, leicht auseinander nehmbaren bzw. wieder zusammenfügbaren Baueinheiten aufzubauen (US-PS 5 503 243). Auch in diesem Fall wären jedoch vor und nach einem Transport umständliche Montage- und Demontagearbeiten erforderlich. Transporter dieser Art sind daher bisher nur für kleinere Baugrößen und im Bereich des Transports von alten oder behinderten Personen bekannt geworden.

Demgegenüber liegt der Erfindung die Aufgabe zugrunde, eine Möglichkeit zur Erleichterung des Transports von dreirädigen Transportern der beschriebenen Art zu schaffen und dabei gleichzeitig das zulässige Zuladegewicht zu vergrößern.

Zur Lösung dieser Aufgabe dienen insbesondere die kennzeichnenden Merkmale der Ansprüche 1 und 2.

Die Erfindung geht von dem Gedanken aus, einen Kfz-Anhänger zu schaffen, auf dem der Dreirad-Transporter nicht nur transportiert, sondern auch in einer Weise permanent montiert werden kann, daß keine umständlichen und zeitraubenden Manipulationen vor und nach einem Transport erforderlich sind. Dabei wird der Anhänger vorzugsweise so gestaltet, daß der äußerliche, optische Gesamteindruck des Transporters bei seinem Gebrauch im wesentlichen unverändert bleibt. Ein solcher Kfz-Anhänger kann preisgünstig und unter Beibehaltung der Gebrauchsfähigkeit von wesentlichen, am Transporter ohnehin vorhandenen Einrichtungen (z. B. Vorderrad, Lenkung, Beleuchtung) hergestellt werden.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 die Draufsicht auf einen erfindungsgemäßen Kfz-Anhänger für einen Dreirad-Transporter;
Fig. 2 die Draufsicht auf eine Zuggabel des Anhängers nach Fig. 1;
Fig. 3 und 4 je eine Seiten- und Hinteransicht des Anhängers nach Fig. 1;
Fig. 5 eine perspektivische Darstellung des Anhängers nach Fig. 1 bis 4;
Fig. 6 in vergrößerter Darstellung einen Verstellmechanismus für eine Hinterachse des Anhängers nach Fig. 5;
Fig. 7 und 8 eine Seitenansicht des Anhängers und des Dreirad-Transporters in je einer auseinander gezogenen und fest zusammengebauten Stellung; und
Fig. 9 eine Hinteransicht des Anhängers und des Transporters im zusammengebauten Zustand nach Fig. 8.

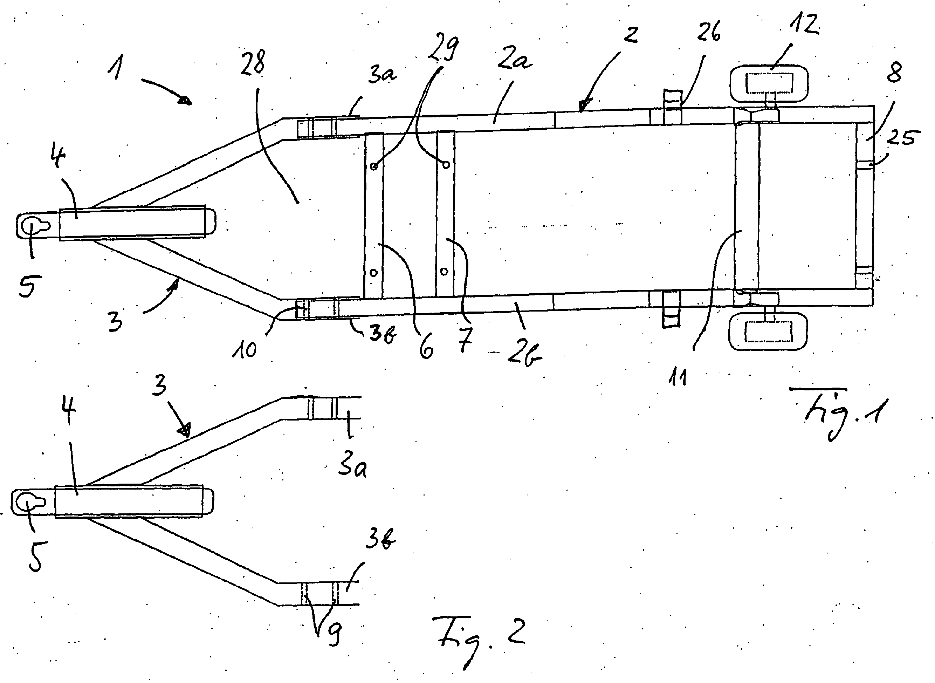

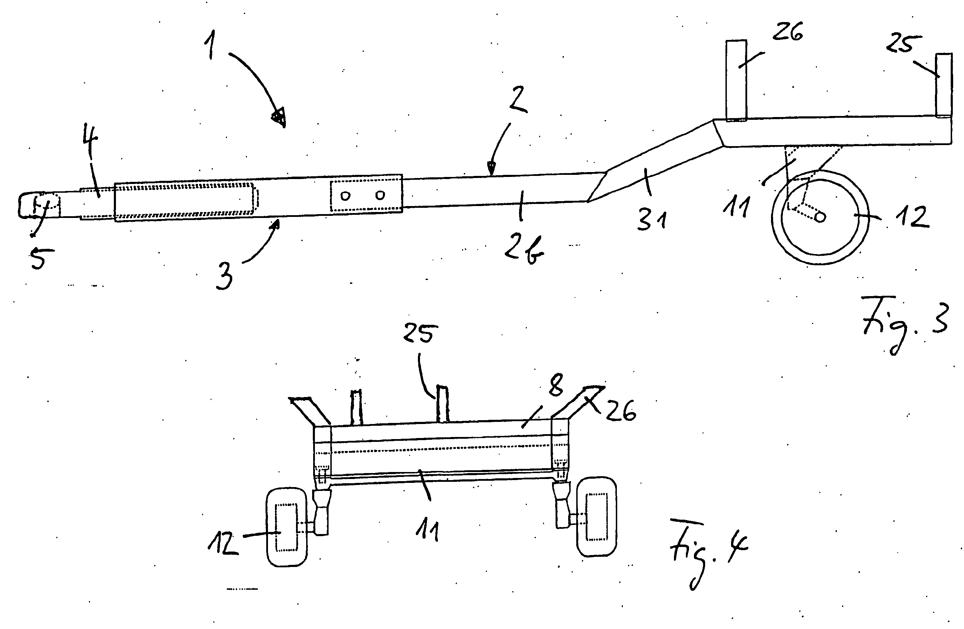

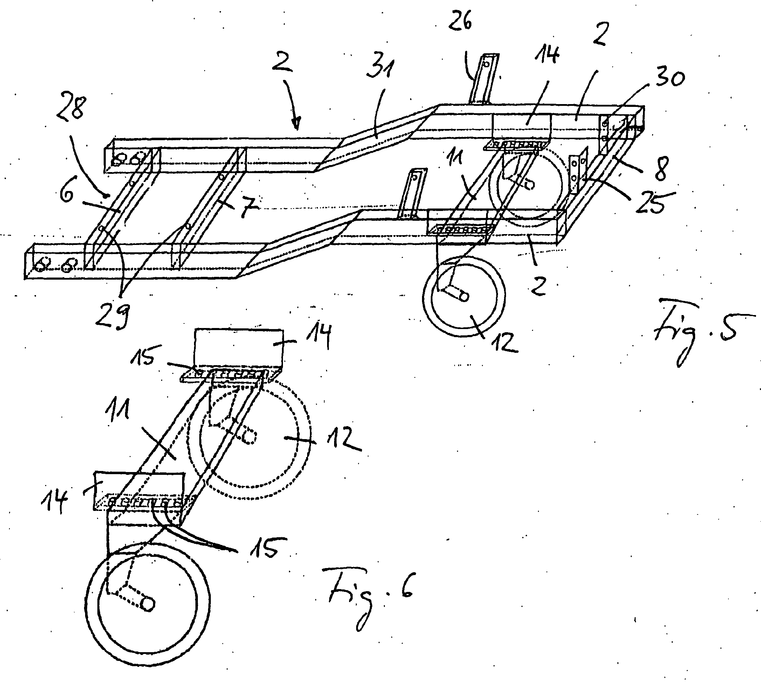

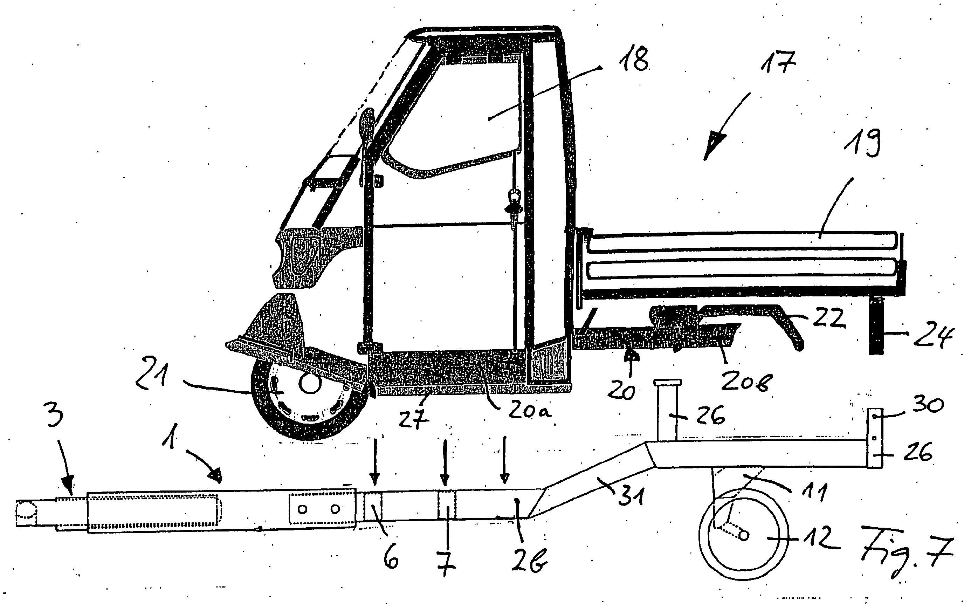

Nach Fig. 1 bis 6 enthält ein erfindungsgemäßer Kfz-Anhänger 1 für ein Zugfahrzeug in Form eines Personenkraftwagens od. dgl. einen Grundrahmen 2, an dessen Vorderseite eine Zuggabel 3 befestigt ist, die an ihrem Vorderende ein Zugrohr 4 mit einer üblichen Anhängerkupplung 5 aufweist. Der Grundrahmen 2 enthält an seinen Außenseiten zwei parallel angeordnete Längsschienen 2a und 2b, die durch Querstreben 6, 7 und 8 auf Abstand gehalten und fest miteinander verbunden sind. Die Zuggabel 3 ist an ihrem Hinterende vorzugsweise mit zwei in Längsrichtung verlaufenden Ansätzen 3a, 3b versehen, die U-förmige Enden aufweisen, mit diesen auf die zugehörigen Vorderenden der Längsschienen 2a, 2b des Grundrahmens 2 aufgeschoben werden können und mittels nicht dargestellter Befestigungsschrauben lösbar mit diesen verbunden werden. Zu diesem Zweck weisen die Längsschienen 2a, 2b bzw. Ansätze 3a, 3b auf einander ausrichtbare Schraublöcher 9, 10 auf. Die Sicherung der Befestigungsschrauben kann mit Hilfe von Muttern erfolgen.

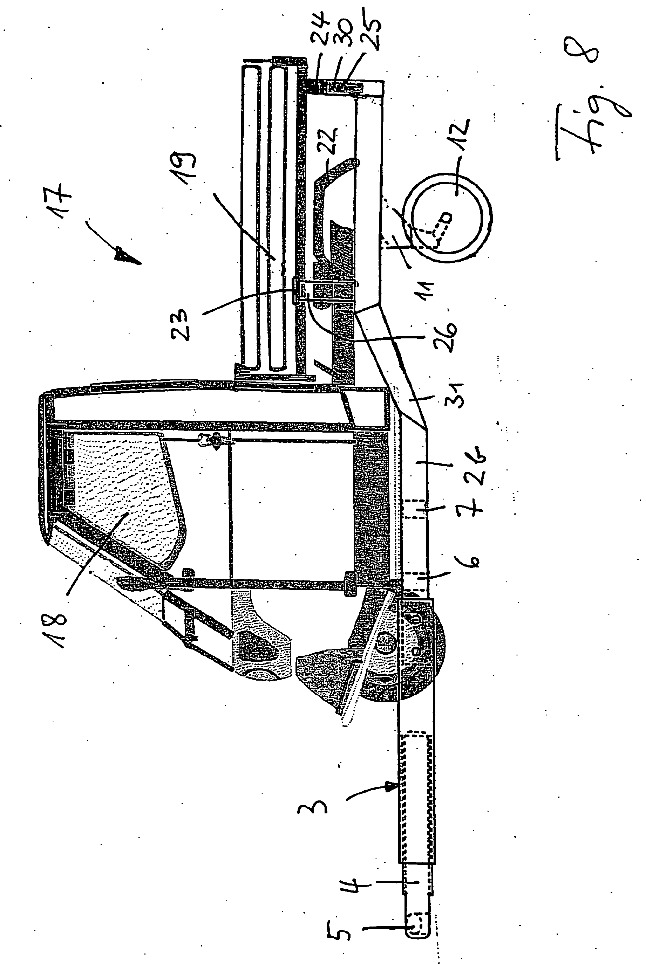

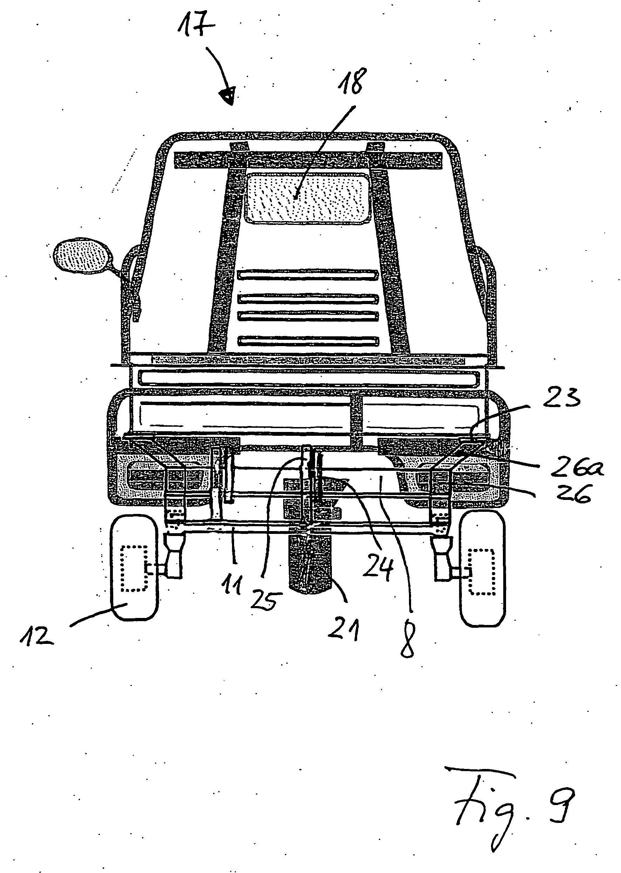

Wie insbesondere Fig. 5 und 6 zeigen, ist im hinteren Bereich des Grundrahmens 2 eine Achse 11 mit zwei drehbar an dieser gelagerten Rädern 12 befestigt. Damit die Lage der Räder 12, in Längsrichtung der Längsschienen 2a, 2b betrachtet, bei Bedarf verändert und z. B. der gewünschten Belastung des Anhängers 1 angepaßt werden kann, sind an den Längsschienen 2a, 2b einander gegenüber liegende Montagewinkel 14 befestigt, die eine Mehrzahl von in Längsrichtung beabstandeten Montagelöchern 15 aufweisen. Diese sind an in die Rahmenöffnung ragenden Abschnitten der Montagewinkel 14 derart vorgesehen, daß die Enden der Achse 11 auf diese Abschnitte aufgelegt und mittels nicht dargestellter Befestigungsschrauben und ausgewählter Montagelöcher 15 am Grundrahmen 2 befestigt werden können.

Die beiden Querstreben 6 und 7, von denen auch eine weggelassen werden könnte, sowie die Querstrebe 8 bilden je eine vordere bzw. hintere Halteeinrichtung für einen aus Fig. 7 bis 9 ersichtlichen Dreirad-Transporter 17. Dieser enthält üblicherweise im vorderen Bereich ein Fahrerhaus 18 und im hinteren Bereich einen Laderaum 19, die beide auf einer Rahmenkonstruktion 20 abgestützt sind, die ein vorderes Rahmenteil 20a für das Fahrerhaus 18 und ein hinteres Rahmenteil 20b für den Laderaum 19 enthält, wie in Fig. 7 bis 9 nur teilweise und schematisch angedeutet ist. Der Laderaum 19 ist im Ausführungsbeispiel als offene Ladepritsche dargestellt, vorzugsweise jedoch mit einem geschlossenen Kofferaufbau versehen. Der Transporter 17 weist außerdem ein einzelnes, lenkbares und mit einer Bremse versehenes Vorderrad 21 auf und ist weiterhin in nicht dargestellter Weise mit einem Motor, einem zugehörigen Getriebe und zwei im Bereich von Radkästen 22 angeordneten Hinterrädern versehen, die vom Motor angetrieben werden können und mit Stoßdämpfern an der Rahmenkonstruktion 20 gelagert sind.

Fig. 7 bis 9 zeigen den Transporter 17 in einem für die Zwecke der Erfindung bestimmten Zustand, in dem der Motor, das Getriebe und die Hinterräder ausgebaut sind. Dadurch liegen, wie insbesondere in Fig. 9 angedeutet ist, zwei plattenförmige, an der Rahmenkonstruktion 20 befestigte Stoßdämpferaufnahmen 23 und zwei an der Rahmenkonstruktion 20 befestigte und von dieser nach unten ragende Motorträger 24 frei, die z. B. aus gewinkelten Blechen bestehen und zur Befestigung des nicht dargestellten Motors des Transporters 17 dienen.

Die hintere Querstrebe 8 des erfindungsgemäßen Anhängers 1 ist dort, wo bei der weiter unten beschriebenen Montage des Transporters 17 die Motorträger 24 zu liegen kommen, mit zwei vorzugsweise senkrecht aufragenden, z. B. aus Winkeleisen bestehenden Stützen 25 versehen. Außerdem weisen die beiden Längsstreben 2a, 2b dort, wo bei der Montage des Transporters 17 die Stoßdämpferaufnahmen 23 zu liegen kommen, je eine nach oben erstreckte Stütze 26 auf, auf deren oberen, vorzugsweise tellerförmigen Enden sich die Aufnahmen 23 abstützen sollen. Ist der Radstand der beiden Räder 12 des Anhängers 1 so bemessen, wie dem Radstand des Transporters 17 entspricht, und daher der Abstand der Längsschienen 2a, 2b des Grundrahmens 2 kleiner als der Abstand der Aufnahmen 23, dann sind die Stützen 26 vorzugsweise zumindest im oberen Bereich mit von unten nach oben schräg nach außen erstreckten Abschnitten 26a versehen, wie nur in Fig. 9 deutlich sichtbar ist.

Der Transporter 17 wird auf dem Anhänger 1 in einer Weise montiert, wie im wesentlichen aus Fig. 7 bis 9 ersichtlich ist. Hierzu wird er nach dem Ausbau des Motors, des Getriebes, der Hinterräder und der Stoßdämpfer zunächst entsprechend Fig. 7 von oben her so auf den Anhänger 1 abgesenkt, daß die Stoßdämpferaufnahmen 23 auf den oberen Enden der Stützen 26 und die von der Rahmenkonstruktion 20 nach unten ragenden Motorträger 24 unmittelbar neben den Stützen 25 zu liegen kommen. Zu diesem Zweck sind die Stützen 25, 26 mit Abständen voneinander am Grundrahmen 2 befestigt, die genau den Abständen zwischen den Motorträgern 24 bzw. den Aufnahmen 23 entsprechen, und zwar sowohl in Längsrichtung als auch quer dazu. Außerdem sind die Querstreben 6, 7 so am Grundrahmen 2 angeordnet, daß sich auf sie beim Absenken des Transporters 17 auf den Anhänger 1 ein Boden 27 des Fahrerhauses 18 auflegt. Schließlich sind die Zuggabel 3, die Längsschienen 2a, 2b des Grundrahmens 2 und die vordere der beiden Querstreben 6, 7 so relativ zueinander angeordnet, daß sie einen Freiraum 28 begrenzen, der beim Aufliegen des Transporters 17 auf dem Anhänger 1 zumindest teilweise von dessen Vorderrad 21 durchragt wird, wie Fig. 8 und 9 zeigen.

Nachdem der Transporter 17 in der beschriebenen Weise auf dem Anhänger 1 abgesetzt ist, wird er vorzugsweise lösbar mit dem Grundrahmen 2 verbunden. Hierzu werden z. B. im Boden 2 des Fahrerhauses 18 Löcher angebracht, die auf in den Querstreben 6, 7 ausgebildete Löcher 29 ausgerichtet sind. Außerdem werden die hinteren Stützen 25 mit Bohrungen 30 versehen, die genau auf Bohrungen ausgerichtet sind, die die Motorträger 24 aufweisen und mittels derer vorher der Motor am Transporter 17 befestigt war. Schließlich ist es möglich, aber nicht unbedingt erforderlich, auch die zur Anlage kommenden Teile der Aufnahmen 23 und Stützen 26 mit aufeinander ausgerichteten Bohrungen zu versehen.

Der Transporter 17 wird nun vorzugsweise mittels nicht dargestellter Befestigungsschrauben, die durch die beschriebenen Löcher bzw. Bohrungen gesteckt und mit Muttern gesichert werden, fest und unverschieblich am Anhänger 1 befestigt. Dadurch bilden die Querstreben 6, 7 eine vordere und die Querstrebe 8 mit den Stützen 25 und 26 eine hintere, an die Geometrie des Transporters 17 angepaßte Halteeinrichtung, die beide dazu dienen, den Transporter 17 und den Anhänger 1 zu einer festen Baueinheit miteinander zu verbinden.

Der Anhänger 1 kann nun mittels der Anhängerkupplung 4 in bekannter Weise an ein Zugfahrzeug, z. B. einen Pkw, angekoppelt werden. Dadurch wird es möglich, den Transporter 17 in Abhängigkeit davon, ob der Anhänger 1 zusätzlich mit einer Bremse und/oder Stoßdämpfern versehen ist, mit einer zulässigen Geschwindigkeit von 80 km/h bis 100 km/h zu einem Einsatzort zu transportieren, an dem er gerade benötigt wird. Dabei kann das Fahrverhalten dadurch optimiert werden, daß die Hinterachse 11 mittels der als Verstellmechanismus dienenden Montagewinkel 14 an einer zweckmäßigen Stelle längs des Grundrahmens 2 angeordnet wird. Je nach Fall kann die Zuladung außerdem wesentlich größer sein, als für den Transporter 17 allein zulässig wäre.

Ist der Transporter 17 am Einsatzort angekommen, kann zunächst das Zugfahrzeug abgekoppelt werden, wonach es wieder für beliebige andere Zwecke verfügbar wäre. Mit besonderem Vorteil wird die Anordnung außerdem so getroffen, daß das Vorderrad 21 des Transporters 17 den Freiraum 28 (Fig. 1) mit einem vorgewählten Maß durchragt. Dieses ist so bemessen, daß das Vorderrad 21 im an das Zugfahrzeug angekoppelten Zustand des Anhängers 1 um ca. 10 cm oder mehr oberhalb des Erdbodens angeordnet ist und diesen daher auch bei üblichen Durchfederungen nicht berührt, im vom Zugfahrzeug abgekoppelten Zustand des Anhängers 1 dagegen auf dem Erdboden aufliegt und als vordere Stütze für den Anhänger 1 dient. Werden dem Vorderrad 21, was zu bevorzugen ist, im aufgeladenen Zustand des Transporters 17 seine üblichen Funktionen (z. B. Lenkbarkeit, Bremsfähigkeit od. dgl.) belassen, dann ergibt sich der weitere Vorteil, daß die aus Anhänger 1 und Transporter 17 bestehende Baueinheit zumindest begrenzt hin- und hergefahren und dabei auch gelenkt werden kann. Mit besonderem Vorteil wird dem Vorderrad 21 dabei eine zusätzliche Feststellbremse zugeordnet, um ein unbeabsichtigtes Wegrollen des Anhängers 1 im abgekoppelten Zustand zu verhindern.

Im an das Zugfahrzeug angekoppelten Zustand wird das Vorderrad 21 vorzugsweise in seiner Geradeausstellung arretiert, damit es sich während des Transports bei unvorhergesehenen Durchfederungen und bei Straßenberührung normal drehen kann und nicht beschädigt wird.

Die Zuggabel 3 wird im abgekoppelten Zustand des Anhängers 1 vorzugsweise vom Grundrahmen 2 gelöst. Dadurch ergibt sich der Vorteil, daß das äußere Erscheinungsbild des Transporters 17 trotz seiner Montage auf dem Anhänger 1 im wesentlichen unverändert bleibt (Fig. 8), insbesondere wenn der Grundrahmen 2 mit einem wenig auffallenden Anstrich versehen wird, da die Räder 12 des Anhängers 1 den Eindruck erwecken, als seien sie Bestandteil des Transporters 17.

Mit besonderem Vorteil werden die Beleuchtungseinrichtungen, insbesondere die Rück-, Brems- und Blinkerleuchten des Transporters 17 unverändert gelassen. Damit können diese im angekoppelten Zustand des Anhängers 1 über entsprechende, mit dem Zugfahrzeug verbundene Leitungen nutzbar gemacht werden, ohne daß Zusatzleuchten für den Anhänger 1 erforderlich werden.

Die Erfindung betrifft im übrigen nicht nur den speziell an den Transporter 17 angepaßten Anhänger 1 (Anspruch 1), sondern auch die Kombination aus dem Anhänger 1 und dem an diesem fest montierten Transporter 17 (Anspruch 2). Dadurch soll ermöglicht werden, einem Kunden wahlweise nur den Anhänger 1 oder den Anhänger 1 mit bereits auf diesem montierten Transporter 17 zur Verfügung zu stellen. Dabei ist klar, daß der Transporter 17 bei lösbarer Verbindung mit den Halteeinrichtungen 6, 7 bzw. 25, 26 usw. jederzeit wieder vom Anhänger 1 demontiert und in seinen Ausgangszustand zurückversetzt werden kann.

Die Erfindung ist nicht auf das beschriebene Ausführungsbeispiel beschränkt, das auf vielfache Weise abgewandelt werden kann. Dies gilt insbesondere für die Form des beschriebenen Grundrahmens 2, dessen Längsschienen 2a, 2b z. B. gemäß Fig. 3, 5, 7 und 8 in einem mittleren Teil jeweils mit einer Abstufung 31 versehen werden können, falls dies aufgrund eines Niveauunterschiedes zwischen dem Boden 27 des Fahrerhauses 18 und dem hinteren, den Laderaum 19 tragenden Rahmenteil 20b zweckmäßig sein sollte. Dabei ist klar, daß die Erfindung in entsprechender Abwandlung auch auf andere als den beschriebenen Dreirad-Transporter 17 (Fa. Piaggio-Deutschland GmbH, 86416 Diedorf, Modell "APE C80" oder "APE TL5T") angewendet werden kann. Weiterhin ist die Erfindung nicht auf ein bestimmtes Material für den Grundrahmen 2 beschränkt, selbst wenn dieser vorzugsweise aus durch Schweißen verbundenen Stahlteilen zusammen gesetzt wird. Auch die Größenabmessungen des Anhängers 1 sind weitgehend variabel. Insbesondere kann es zur Verbesserung der Fahreigenschaften zweckmäßig sein, die Räder 12 mit einem größeren Abstand anzuordnen, als dies für die vorher am Transporter 17 vorgesehenen Hinterräder gilt. Schließlich versteht sich, daß die verschiedenen Merkmale auch in anderen als den beschriebenen und dargestellten Kombinationen angewendet werden können.

## Patentansprüche

1. Kfz-Anhänger mit einem Grundrahmen (2), einer an dessen Vorderseite montierten Zuggabel (3) und an dessen Hinterseite montierten Rädern (12), **dadurch gekennzeichnet, daß** er zur Aufnahme und Befestigung eines mit einem Fahrerhaus (18), einem Laderaum (19), einem Vorderrad (21), Hinterrädern und einem Motor versehenen Dreirad-Transporters (17) eingerichtet ist, indem der Grundrahmen (2) mit wenigstens einer vorderen, zur Befestigung am Boden (27) des Fahrerhauses (18) bestimmten Halteeinrichtung (6, 7) und wenigstens einer hinteren, zur Befestigung an einer Stoßdämpferaufnahme (23) und/oder einem Motorträger (24) der Ladefläche (19) bestimmten Halteeinrichtung (25, 26) versehen ist.

2. Anhänger nach Anspruch 1, **dadurch gekennzeichnet, daß** der Transporter (17) bei demontiertem Motor und demontierten Hinterrädern am Grundrahmen (2) befestigt ist, indem die vordere Halteeinrichtung (6, 7) mit dem Boden (27) des Fahrerhauses (18) und die hintere Halteeinrichtung (25, 26) mit den Stoßdämpferaufnahmen (23) und/oder den Motorträgern (24) fest verbunden ist.

3. Anhänger nach Anspruch 2, **dadurch gekennzeichnet, daß** der Transporter (17) lösbar mit dem Grundrahmen (2) verbunden ist.

4. Anhänger nach einem der Ansprüche 1 bis 3, **dadurch gekennzeichnet, daß** der Grundrahmen (2) zwei seitliche, mit der Zuggabel (3) verbundene Längsschienen (2a, 2b) derart aufweist, daß diese und die Zuggabel (3) einen zum Durchtritt des Vorderrades (21) des Transporters (17) bestimmten Freiraum (28) begrenzen.

5. Anhänger nach Anspruch 4, **dadurch gekennzeichnet, daß** das Vorderrad (21) den Freiraum (28) im am Grundrahmen (2) befestigten Zustand des Transporters (17) derart durchragt, daß es bei an das Kraftfahrzeug angekoppeltem Anhänger (1) oberhalb des Erdbodens angeordnet, bei vom Kraftfahrzeug abgekoppeltem Anhänger dagegen am Erdboden abgestützt ist.

6. Anhänger nach einem der Ansprüche 1 bis 5, **dadurch gekennzeichnet, daß** die vordere Halteeinrichtung wenigstens eine zwischen den Längsschienen (2a, 2b) erstreckte Querstrebe (6, 7) enthält.

7. Anhänger nach einem der Ansprüche 1 bis 6, **dadurch gekennzeichnet, daß** die hintere Halteeinrichtung wenigstens eine zwischen den Längsschienen (2a, 2b) erstreckte Querstrebe (8) mit zwei im wesentlichen senkrecht von dieser aufragenden, zur Befestigung an den Motorträgern (24) des Transporters (17) bestimmten, hinteren Stützen (25) aufweist.

8. Anhänger nach einem der Ansprüche 1 bis 7, **dadurch gekennzeichnet, daß** die hintere Halteeinrichtung zwei von den Längsschienen (2a, 2b) aufragende, zur Befestigung an den Stoßdämpferaufnahmen (23) bestimmte, vordere Stützen (26) aufweist.

9. Anhänger nach Anspruch 8, **dadurch gekennzeichnet, daß** die vorderen Stützen (26) zumindest teilweise von unten nach oben schräg nach außen erstreckt sind.

10. Anhänger nach einem der Ansprüche 2 bis 9, **dadurch gekennzeichnet, daß** der Transporter (17) mittels Schrauben an der Querstrebe (6, 7) und den Stützen (25, 26) befestigt ist.

11. Anhänger nach einem der Ansprüche 2 bis 10, **dadurch gekennzeichnet, daß** der Transporter (17) mit funktionsfähiger Lenkung, Vorderbremse und Beleuchtung am Grundrahmen (2) befestigt ist.

12. Anhänger nach einem der Ansprüche 2 bis 11, **dadurch gekennzeichnet, daß** der Transporter (17) bei in Geradeausstellung befindlichem Vorderrad (21) am Grundrahmen (2) befestigt ist.

13. Anhänger nach einem der Ansprüche 1 bis 12, **dadurch gekennzeichnet, daß** die Zuggabel (3) lösbar mit dem Grundrahmen (2) verbunden ist.

14. Anhänger nach einem der Ansprüche 1 bis 13, **dadurch gekennzeichnet, daß** die Räder (12) an einer Hinterachse (11) drehbar gelagert sind, die an verschiedenen, in Längsrichtung des Grundrahmens (2) beabstandeten Stellen an den Längsschienen (2a, 2b) befestigbar ist.

## Claims

1. Motor vehicle trailer with a base frame (2), a tow bar (3) mounted on its front side and wheels (12) mounted on its rear side, **characterised in that** it is fitted to receive and secure a three-wheeled transport vehicle (17) provided with a driver's cabin (18), a loading area (19), a front wheel (21), rear wheels and an engine by the base frame (2) being provided with at least one front holding means (6, 7) intended for securing to the base (27) of the driver's cabin (18) and at least one rear holding means (25, 26) intended for securing to a shock absorber seat (23) and/or an engine support (24) of the loading area (19).

2. Trailer according to Claim 1, **characterised in that** the transport vehicle (17) is secured to the base frame (2) when the engine is removed and the rear wheels are removed by the front holding means (6, 7) being fixedly connected to the base (27) of the driver's cabin (18) and the rear holding means (25, 26) being fixedly connected to the shock absorber seats (23) and/or the engine supports (24).

3. Trailer according to Claim 2, **characterised in that** the transport vehicle (17) is detachably connected to the base frame (2).

4. Trailer according to one of Claims 1 to 3, **characterised in that** the base frame (2) has two lateral longitudinal rails (2a, 2b) connected to the tow bar (3) such that these and the tow bar (3) define a free space (28) intended for the front wheel (21) of the transport vehicle (17) to pass through.

5. Trailer according to Claim 4, **characterised in that** when the transport vehicle (17) is secured to the base frame (2), the front wheel (21) projects through the free space (28) in such a manner that it is arranged above the ground when the trailer (1) is coupled to the motor vehicle, but is supported on the ground when the trailer is decoupled from the motor vehicle.

6. Trailer according to one of Claims 1 to 5, **characterised in that** the front holding means includes at least one cross beam (6, 7) extending between the longitudinal rails (2a, 2b).

7. Trailer according to one of Claims 1 to 6, **characterised in that** the rear holding means has at least one cross beam (8) extending between the longitudinal rails (2a, 2b) with two rear supports (25) projecting essentially perpendicularly from said cross beam and intended for securing to the engine supports (24) of the transport vehicle (17).

8. Trailer according to one of Claims 1 to 7, **characterised in that** the rear holding means has two front supports (26) projecting up from the longitudinal rails (2a, 2b) and intended for securing to the shock absorber seats (23).

9. Trailer according to Claim 8, **characterised in that** the front supports (26) are extended at least partially obliquely outwards from the bottom upwards.

10. Trailer according to one of Claims 2 to 9, **characterised in that** the transport vehicle (17) is secured to the cross beams (6, 7) and the supports (25, 26) by means of screws.

11. Trailer according to one of Claims 2 to 10, **characterised in that** the transport vehicle (17) having operational steering, front brake and lighting is secured to the base frame (2).

12. Trailer according to one of Claims 2 to 11, **characterised in that** the transport vehicle (17) is secured to the base frame (2) with the front wheel (21) pointing straight ahead.

13. Trailer according to one of Claims 1 to 12, **characterised in that** the tow bar (3) is detachably connected to the base frame (2).

14. Trailer according to one of Claims 1 to 13, **characterised in that** the wheels (12) are rotatably disposed on a rear axle (11), which can be secured to the longitudinal rails (2a, 2b) at different locations spaced in the longitudinal direction of the base frame (2).

## Revendications

1. Remorque de véhicule à moteur, avec un châssis de base (2), une flèche de remorque (3) montée sur le côté arrière du châssis et des roues (12) montées sur le côté arrière du châssis, **caractérisée en ce qu'**elle est conçue pour recevoir et fixer un transporteur (17) à trois roues doté d'une cabine de conduite (18), d'un espace de chargement (19), d'une roue avant (21), de roues arrière et d'un moteur, par le fait que le châssis de base (2) est pourvu d'au moins un organe de maintien avant (6, 7) à fixer au fond (27) de la cabine de conduite (18) et d'au moins un organe de maintien arrière (25, 26) à fixer à un élément récepteur (23) d'amortisseur et/ou à un élément porteur (24) de moteur de la surface de chargement (19).

2. Remorque selon la revendication 1, **caractérisée en ce que** le transporteur (17) est fixé sur le châssis de base (2) avec le moteur démonté et les roues arrière démontées, par le fait que l'organe de maintien avant (6, 7) est fixement assemblé au fond (27) de la cabine de conduite (18) et l'organe de maintien arrière (25, 26) aux éléments récepteurs (23) d'amortisseurs et/ou aux éléments porteurs (24) de moteur.

3. Remorque selon la revendication 2, **caractérisée en ce que** le transporteur (17) est assemblé de manière amovible au châssis de base (2).

4. Remorque selon l'une des revendications 1 à 3, **caractérisée en ce que** le châssis de base (2) présente deux longerons latéraux (2a, 2b) assemblés à la flèche de remorque (3) de telle sorte que ces longerons et la flèche de remorque (3) délimitent un espace libre (28) pour le passage de la roue avant (21) du transporteur (17).

5. Remorque selon la revendication 4, **caractérisée en ce que** la roue avant (21), lorsque le transporteur (17) est fixé sur le châssis de base (2), dépasse à travers l'espace libre (28) de telle sorte qu'elle est disposée au-dessus du sol lorsque la remorque (1) est attelée au véhicule à moteur, mais qu'elle s'appuie sur le sol lorsque la remorque est dételée du véhicule à moteur.

6. Remorque selon l'une des revendications 1 à 5, **caractérisée en ce que** l'organe de maintien avant comprend au moins une traverse (6, 7) s'étendant entre les longerons (2a, 2b).

7. Remorque selon l'une des revendications 1 à 6, **caractérisée en ce que** l'organe de maintien arrière présente au moins une traverse (8) s'étendant entre les longerons (2a, 2b) et pourvue de deux supports arrière (25) se dressant essentiellement verticalement à partir d'elle et à fixer aux éléments porteurs (24) de moteur du transporteur (17).

8. Remorque selon l'une des revendications 1 à 7, **caractérisée en ce que** l'organe de maintien arrière présente deux supports avant (26) se dressant à partir des longerons (2a, 2b) et à fixer aux éléments récepteurs (23) d'amortisseurs.

9. Remorque selon la revendication 8, **caractérisée en ce que** les supports avant (26) s'étendent au moins pour partie, de bas en haut, en oblique vers l'extérieur.

10. Remorque selon l'une des revendications 2 à 9, **caractérisée en ce que** le transporteur (17) est fixé au moyen de vis sur la traverse (6, 7) et sur les supports (25, 26).

11. Remorque selon l'une des revendications 2 à 10, **caractérisée en ce que** le transporteur (17) est fixé sur le châssis de base (2) avec une direction, un frein avant et un éclairage fonctionnels.

12. Remorque selon l'une des revendications 2 à 11, **caractérisée en ce que** le transporteur (17) est fixé sur le châssis de base (2) avec la roue avant (21) en position de marche en ligne droite.

13. Remorque selon l'une des revendications 1 à 12, **caractérisée en ce que** la flèche de remorque (3) est assemblée de manière amovible au châssis de base (2).

14. Remorque selon l'une des revendications 1 à 13, **caractérisée en ce que** les roues (12) sont montées à rotation sur un essieu arrière (11) qui peut être fixé sur les longerons (2a, 2b) en différents emplacements, distants dans la direction longitudinale du châssis de base (2).
